# EUROPEAN PATENT SPECIFICATION

(11) **EP 3 899 491 B1**
(45) Date of publication and mention of the grant of the patent: **31.01.2024**
(21) Application number: 18845375.7
(22) Date of filing: 28.12.2018
(51) Int. Cl.: G01N 17/00, G01N 27/20

(54) **CORROSION MONITORING SYSTEM AND METHOD**
SYSTEM UND VERFAHREN ZUR KORROSIONSÜBERWACHUNG
SYSTÈME ET PROCÉDÉ DE SURVEILLANCE DE CORROSION

(43) Date of publication of application: 27.10.2021
(73) Proprietor: CARDILLI, Emanuele, 3043 TL Rotterdam (NL)
(72) Inventor: CARDILLI, Emanuele, 3043 TL Rotterdam (NL)
(74) Representative: Sach, Greg Robert
(86) International application number: PCT/NL2018/050892
(87) International publication number: WO 2020/139080

(56) References cited:
- WO-A1-2017/129983
- US-A- 4 877 923

## Description

### Filed of the invention

The invention relates to a corrosion monitoring system for detecting corrosion due to ingress of water into an insulation system of a metal body such as a pipe, and to a method of corrosion monitoring.

### Background

It is conventional to insulate metal pipelines with an insulation system that may comprise a mantle of thermal insulation material and a jacket around the insulation material. Ingress of water into the insulation system can cause gradual corrosion of the pipeline. When this continues over a long enough period, e.g. one or more years, this corrosion can cause pipeline defects.

WO2017129983 describes a method of getting advance warning of such corrosion. An electromagnetic waveguide in the form of a coaxial cable or a wire pair cable is used in the insulation system. The outer conductor of the coaxial cable or at least one of the wires of the wire pair cable, which is exposed to water in the insulation system (if any) is made of the same material as the pipe, or a less corrosion resistant material than the material of the pipe.

When water enters the insulation system, the water can reach both the pipe and the exposed part of the cable. Thus ingress of water infiltration will start corrosion processes in both the pipe and the cable. The effect on the cable is that it changes the impedance of at least the exposed conductor of the cable. This effect can be detected by means of electrical test signals. By means of time delay measurements the position of such corrosion along the pipe can be determined, making it possible to repair or replace the insulation system before the ingress of water infiltration has caused excessive damage to the pipeline.

In the embodiment that uses a coaxial cable, both the outer conductor and the inner conductor of the coaxial may be of copper, with a dielectric insulator in between. In addition, a perforated layer such as plastic netting is present around the outer conductor of the coaxial cable to keep the outer conductor electrically separated from the pipe, and allowing the water to reach the outer conductor of the coaxial cable. In this way corrosion of the outer conductor of the coaxial cable can be used as an indicator of a risk of corrosion of the pipe.

For reliable detection, corrosion of the cable due to water that has penetrated the insulation system of the pipe should proceed as fast as corrosion of the pipe and preferably faster. WO2017129983 describes that this can be realized by making the exposed conductor of the cable of a material (e.g. Cu) that corrodes faster than the material of the pipe (e.g. Al or steel).

### Summary

Among others, it is an object to provide for a system and method in accordance with the independent claims 1 and 8 respectively for monitoring a risk of corrosion of a metal body by means of an electric cable in an insulation system of the metal body that makes it possible to detect a risk of corrosion of the metal body sooner.

A system for monitoring corrosion of a metal object according to claim 1 is provided. Herein, an electric cable is used in the mantle with a first electrical conductor having a smaller surface area per unit length than the second electrical conductor, characterized in that the first and second electrical conductor are made of a first and second material respectively, the first material being less corrosion resistant in the system than the second material when water penetrates the mantle. The metal object may be a pipe for example. Because a small, less corrosion resistant first conductor is used together with a larger, more corrosion resistant conductor, the effect of corrosion on the first conductor sooner becomes detectable.

Preferably a DC galvanic connection between the first and second electrical conductor is present in the system at least during long periods wherein no measurements are performed. This affects the difference between the corrosion resistance of the materials in the system and makes it easier to create a system wherein there is a significant difference between the corrosion resistance of the first and second material. For example, when the first electrical conductor is of carbon steel and the second conductor is of stainless steel, without galvanic connection the carbon steel would corrode about 0.2-0.5 mm per year, and the corrosion of the stainless steel would be negligible compared to this. But when a galvanic connection between the first and second electrical conductor is present, the carbon steel would corrode five to ten times more per year.

According to the invention a coaxial cable is used, with the inner conductor as the first conductor of the less corrosion resistant material, and a water permeable electrical insulator and outer conductor surrounding the first electrical conductor. In this way reproducible relative positions of the conductors can easily be ensured, so that corrosion effects can easily be measured on the inner conductor in a well controlled context.

The water permeability may be achieved by using braided strands of conductor and/or isolation material. This provides for a strong cable that can easily be manufactured. The water may permeate between the strands. Optionally water permeable strands may be used, to increase the overall permeability.

Preferably a removable short circuit between the first and second electrical conductor is used at an end of the electrical cable, and preferably at both ends. When water leaks in between the conductors this provides for an electrical circuit loop, which increases the corrosion rate of the conductors, due to galvanic corrosion, thus making it possible to detect corrosion sooner. When water permeates, both material are exposed to the same electrochemical solution and they are in electric contact and this will cause galvanic corrosion where the water is present.

According to another aspect a method of monitoring a system for water infiltration is provided in accordance with independent claim 8 that comprises keeping the first and second electrical conductor short circuited to each other during periods of normal use of the metal object;
- removing the short circuit to create an interruption between these periods and
- measuring reflections of electrical signals sent along the cable during the interruption

When short circuits are used at both ends of the cable, at least one and preferably both are removed for the measurement.

### Brief description of the drawing

These and other objects and advantageous aspects will become apparent from a description of exemplary embodiments with reference to the following figures
- Figure 1: shows a cross-section of a pipe and a cable
- Figure 2: shows a detailed cross-section of a cable
- Figures 3a, b: show side views of the metal pipe
- Figures 4: shows a measurement configuration
- Figures 5: shows a detailed cross-section of an alternative cable

### Detailed description of exemplary embodiments

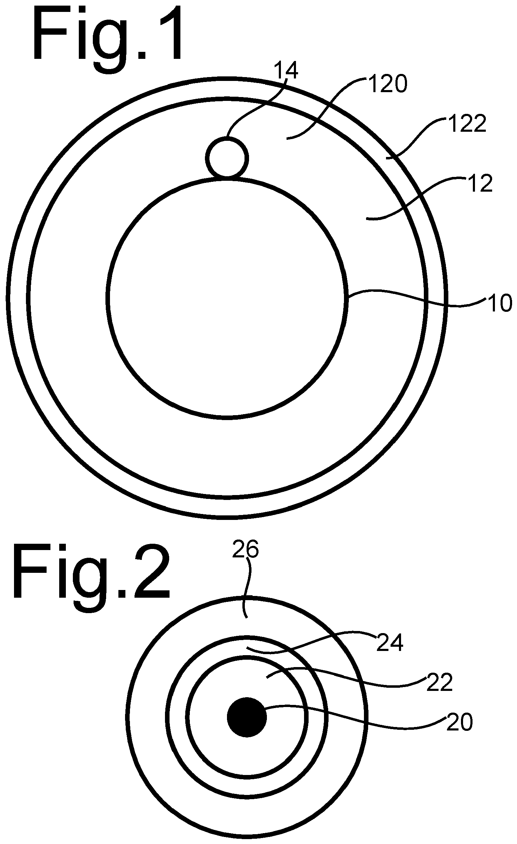

Figure 1 shows a system for monitoring corrosion of a metal object in cross section. The system comprises a metal pipe 10 and an insulation system 12 surrounding metal pipe 10. The insulation system 12 comprises a mantle 120, e.g. of thermal insulation material, surrounding metal pipe 10 and an insulation jacket 122 surrounding the mantle. An electric cable 14 is provided in mantle of insulation material. Although only one electric cable 14 is shown in insulation system 12, it should be appreciated that a plurality of electric cables may be provided in insulation system 12. Although a preferred example with a metal pipe 10 is shown, it should be appreciated that instead another type of metal object with an insulation system 12 may be used, such as a tank or a vessel. Insulation system 12 may entirely surround the metal object or only around an axial direction, as shown for metal pipe 10.

Figure 2 shows a cross-section of the cable in more detail. The cable includes a core electrical conductor (also referred to as first electrical conductor 20), a water permeable inner electrical insulator 22 around first electrical conductor 20, a water permeable surrounding electrical conductor 24 (also referred to as second electrical conductor) around inner electrical insulator 22 and a water permeable outer electrical insulator 26 around second electrical conductor 24. The electrical insulator 22, second electrical conductor 24 and outer electrical insulator 26 are arranged so that water from mantle 120 can reach the core electrical conductor (first electrical conductor 20) through inner electrical insulator 22 and second electrical conductor 24 and if necessary via outer electrical insulator 26. Preferably, the diameter of first electrical conductor 20 is considerably smaller than that of second electrical conductor 24, preferably no more than 0.5, 0.2 or 0.1 times the diameter of the coaxial cable.

Outer electrical insulator 26 is optional. It has the advantage that it prevents direct contact between second electrical conductor 24 and metal pipe 10, which reduces possible corrosion of metal pipe 10. But when second electrical conductor 24 is fixed in mantle 120 so that second electrical conductor 24 cannot come into contact with metal pipe 10, outer electrical insulator 26 may not be needed for this. Outer electrical insulator 26 may similarly not be necessary if the increase of corrosion of metal pipe 10 due to contact is acceptable. Outer electrical insulator 26 may also make it easier to use electric signals to detect corrosion

Inner electrical insulator 22 and optional outer electrical insulator 26 may be made of braided electrically insulating strands. Similarly, second electrical conductor 24 may be made of braided electrically conductive strands. The braiding of inner electrical insulator 22, second electrical conductor 24 and outer electrical insulator 26 makes inner electrical insulator 22, second electrical conductor 24 and outer electrical insulator 26 water permeable. Optionally water permeable strands may be used, to increase the overall permeability. Instead of braided material other water permeable arrangements of materials may be used in electrical insulator 22, second electrical conductor 24 and outer electrical insulator 26, such as netted material woven material, perforated material etc. Electrical insulator 22 and outer electrical insulator 26 are made of electrically insulating material.

The outer surface of pipe 10 may suffer corrosion damage when insulation system 12 suffers from ingress of water from outside. The cable is used to make it possible to detect the ingress. When water permeates insulation system 12, the water is able to reach the core electrical conductor (first electrical conductor 20) of the coaxial cable because inner electrical insulator 22, second electrical conductor 24 and outer electrical insulator 26 are water permeable.

First and second electrical conductor 20, 24 are of electrically conductive material, e.g. of metal. First electrical conductor 20 may be of the same metal as metal pipe 10, or of a material with less corrosion resistance than metal pipe 10, or at least of the same metal as the outer surface of metal pipe 10, or of a material with less corrosion resistance than the outer surface of metal pipe 10. The second electrical conductor 24 is of a more corrosion resistant material than first electrical conductor 20. Second electrical conductor 24 may be of the same material as metal pipe 10 (e.g. of carbon steel). Preferably, the material of second electrical conductor 24 is more corrosion resistant than that of pipe 10. Use of a high corrosion resistant material in second electrical conductor 24 helps to ensure that measurements using the cable will substantially be unaffected by corrosion of the second electrical conductor 24 (the outer conductor in the case of the coaxial cable). But for some measurements this may not be needed, and in some cases the material of second electrical conductor 24 may be the same as that of pipe 10.

In one example, the first electrical conductor is of carbon steel and the second conductor is of stainless steel. In this case, without galvanic connection the carbon steel would corrode about 0.2-0.5 mm per year, and the corrosion of the stainless steel would be negligible compared to this. When a galvanic connection between the first and second electrical conductor is present, the carbon steel would corrode five to ten times more per year.

It can be determined whether a material is more or less corrosion resistant than another material by comparing the corrosion rates of the material. The corrosion rate of a material is the thickness reduction of the uncorroded material in a time unit, e.g. the thickness reduction of a flat layer or a cylinder during one month or one year. The difference between the corrosion rates of materials in the system can be advantageously affected when a galvanic connection is used between the first and second electrical conductors. When materials with different electrochemical potentials are kept galvanically connected, the corrosion rate of the material with the lowest electrochemical potential will be increased relative to that of the material with the highest electrochemical potential. Generally, a material with a higher electrochemical potential is already more corrosion resistant than a material with a low electrochemical potential even without galvanic connection.

Preferably, the material of the second electrical conductor is chosen from materials that have a negligible corrosion rate, which is usually the case for materials with an electrochemical potential of at or above -0.2 Volt (as used herein, all values of the electrochemical voltages are relative to the electrochemical potential of a Saturated Calomel Electrode. Saturated Calomel Electrode is merely used to defined the reference potential level: no Saturated Calomel Electrode need be present in the system). The material of the second electrical conductor is chosen from materials that a significantly higher corrosion rate, which is usually the case for materials with an electrochemical potential at or below -0.4 Volt.

Preferably, the electrochemical potential of the first electrical conductor (e.g. the core of the coaxial cable) is at least 50 millivolt, and more preferably at least 100 millivolt less than that of the second electrical conductor. For example, stainless steel 430 or copper are more corrosion resistant than low alloy steel or low alloy steel cast irons. This correlates with the fact the electrochemical potentials of stainless steel 430 and copper are respectively -0.2 V and -0.3 volts, which are higher than the electrochemical potentials of low alloy steel and low alloy steel cast iron, which are respectively -0.6 V and -0.7V. The material of the first electrical conductor is considered to be less resistant to corrosion than the material of the second electrical conductor if the material of the first electrical conductor is further down such a list, preferably with at least 50 millivolt lower electrochemical potential.

A more extensive list of materials in order of decreasing resistance to corrosion and electro chemical potential in Volts under typical circumstances, from which materials with relatively more and less corrosion resistance can be selected according to the their order in the list is Graphite 0,25, Platinum 0,2, Gold 0,2, Ni-Cr-Mo Alloy C 0, Titanium 0, Ni-Cr-Mo-Cu-Si Alloy G 0, Ni-Fe-Cr Alloy 825 0V, Alloy 20 stainless steel 0. Materials with increasingly negative electrochemical potential are Stainless steel 316-317 minus 0,1 Ni-Cu Alloy 400 k-500 minus 0,1 Stainless steel 304, 321, 347, minus 0,1 Silver minus 0,1, Nickel 200 minus 0,1, Silver-bronze alloys minus 0,1, Nickel-chromium Alloy 600 minus 0,1, Nickel aluminum bronze minus 0,2, 70-30 copper nickel minus 0,2, Lead minus 0,2, Stainless steel 430 minus 0,2, 80-20 copper-nickel minus 0,2, 90-10 copper-nickel minus 0,2, Nickel silver-0,2, Stainless steel type 410, 416 minus 0,2, Tin bronze (G&M) minus 0,2, Silicon bronze minus 0,2, Manganese bronze minus 0,2, Admiralty brass, aluminum brass minus 0,3, 50 Pb-50 Sn minus 0,3, Copper minus 0,3, Tin minus 0,3, Naval brass, yellow brass, red brass minus 0,3, Aluminum bronze minus 0,3, Austenitic nickel cast iron minus 0,5, Low-alloy steel minus 0,6, Low-alloy steel cast iron minus 0,7, Cadmium minus 0,7, Aluminum alloys minus 0,9, Beryllium minus 1, Zinc minus 1, Magnesium minus 1,6.

When water permeates insulation system 12 and reaches the core electrical conductor (first electrical conductor 20) of the coaxial cable, this will cause corrosion of the core electrical conductor (first electrical conductor 20). First electrical conductor 20 will corrode faster than that of metal pipe 10. Even if the material of the conductors is the same, the relative corrosion of first conductors 20 due to galvanic current will be larger than that of second conductor 24, because the latter has a larger surface area, and this is all the more so when the material of second conductor 24 has a higher electrochemical potential than that of first conductor 20. Due to the coaxial arrangement of the conductors, the surface area of first electrical conductor 20 is much smaller than the surface area of second electrical conductor 24 that is exposed to the water. This is already so because the diameter of second electrical conductor 24 is larger than that of first electrical conductor 20, and even more because both the inner and outer surface of second electrical conductor 24 are exposed to water. As used herein, the term system for monitoring corrosion of a metal object refers to the suitability of the system for corrosion detection in the form of the dependence of properties of the cable, as used in the system, e.g. in a system with or without galvanic connection between the conductors, on the same water infiltration in the mantle that also affects the metal object within the mantle. As used herein the term does not necessarily include measurement equipment to measure these properties. A galvanic connection between the conductors increases the corrosion rate of first electrical conductor 20 compared to that of metal pipe10.

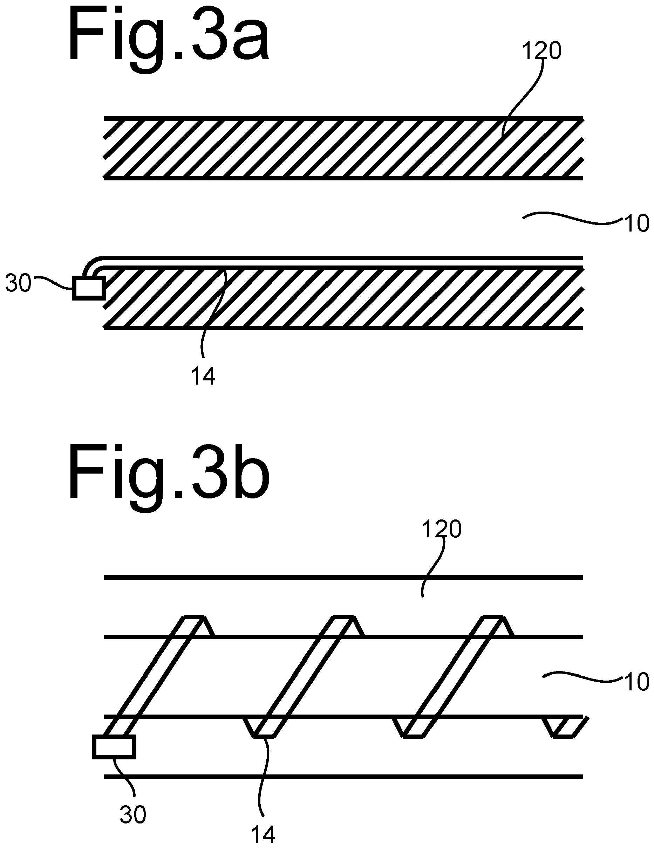

Figures 3a, b show side views of metal pipe 10. In figure 3a, electric cable 14 extends in parallel with the axial direction of metal pipe 10. A removable short circuit 30, which galvanically connects first and second electrical conductors 20, 24 is provided at first end of electric cable 14. Preferably, a second removable short circuit (not shown), which galvanically connects first and second electrical conductor 20, 24 at a second end of electric cable 14 (not shown) is used as well. In figure 3b, electric cable 14 runs helically around the central axis of metal pipe 10. Although a removable short circuit 30 at an end of the cable is shown, it is noted that instead, or in addition, one or more removable short circuits at one or more locations remote from the ends may be used.

The effect of removable short circuit 30 is that core electrical conductor (first electrical conductor 20) corrodes at least partly due an electrolytic corrosion process fed by electrical current from second electrical conductor 24 that occurs where water has permeated into inner electrical insulator 22.

This current flows in a circuit through removable short circuit 30, first and second electrical conductors 20, 24 and the water that has permeated into inner electrical insulator 22 between first and second electrical conductors 20, 24. As may be noted, such a corrosion process causes more corrosion of first electrical conductor 20 in proportion to the size of first electrical conductor 20 than of second electrical conductor 24 in proportion to its size. The surface area per unit cable length of first electrical conductor 20 is much smaller than that of second electrical conductor 24.

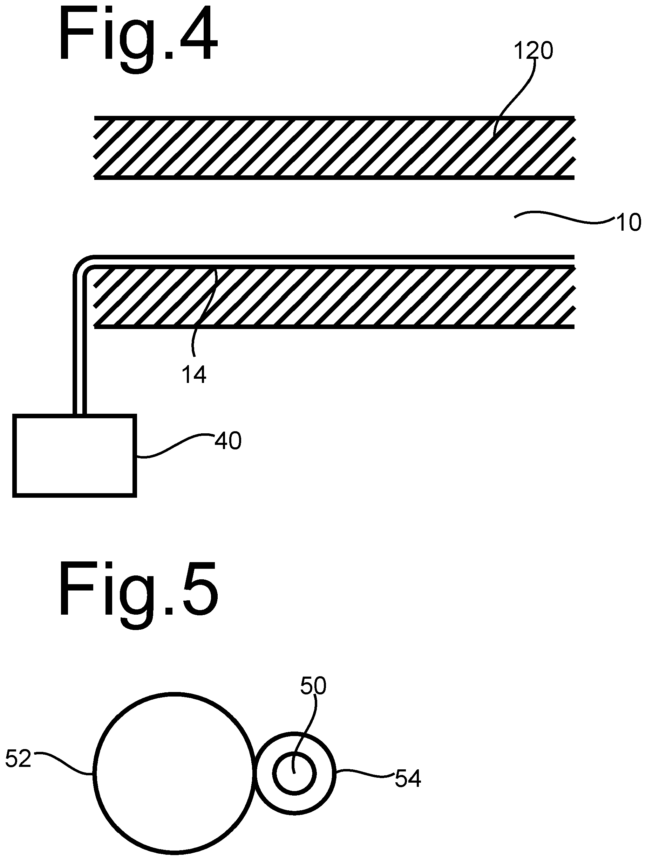

Figure 4 shows a testing configuration for using the system for monitoring corrosion of the metal object. In the testing configuration, short circuit 30 has been removed and a test device 40 has been connected to electric cable 14. Test device 40 may be configured to apply a time dependent voltage between first and second conductor 20, 24 and to measure a resulting current and/or reflected electromagnetic signal that arrives through electric cable 14. Test device 40 may be configured to operate as described in WO2017129983, e.g. by using time domain reflectometry to measure an effect and location of corrosion, or by means of measurement of the impedance of the cable.

Before test device 40 is connected to electric cable 14, electric cable 14 may be kept in a configuration like that shown in figure 3a, b, with a short circuit between first and second conductor 20, 24 for an extended period of time (e.g. more than a week, a month or even a year). After test device 40 has been used to perform measurements, e.g. after a few minutes and generally less than a day, electric cable 14 is preferably returned to a configuration like that shown in figure 3a, b.

As will be appreciated, when water permeates into electric cable 14 while the cable is in the configuration of figures 3a, b, a subsequent measurement in the configuration of figure 4 will be affected mostly by the effect of corrosion of the core electrical conductor (first electrical conductor 20) of the coaxial cable. The effect on the core electrical conductor develops much faster than on metal pipe 10. This provides for early detection of a risk of corrosion.

Instead of a galvanic coupling of test device 40 that is connected to electric cable 14, a magnetic coupling may be used. In this embodiment the short circuit may be replaced by a coupling loop that is galvanically connected between the first and second electrical conductor of the cable. Such a coupling loop may act as a DC galvanic connection instead of the removable short circuit. The coupling loop may have one or more windings, which may form an inductor coil. During testing, the coupling loop remains connected and a further loop, which may also form an inductor coil, that is magnetically coupled to test device 40, e.g. through the air or with the aid of a magnetic core that extends through both the coupling loop and the further loop, may be used to send and detect AC signals into the cable via the coupling loop. Preferably, such a loop is coupled to an end of the cable. Both ends of the cable may be coupled to a respective coupling loop, or one end may be coupled to coupling loop and the other to a short circuit.

Alternatively, one or more coupling loops may be connected between the first and second electrical conductor of the cable at a distance from the end. Thus a long cable may be used, and tests may be performed at different places along the cable by using the coupling loops. As used herein the term "electric signal" is used to refer to both signals that are directly applied to the cable and signals that are applied via loops, using magnetic coupling.

Figure 5 shows a cross section of an example of a wire pair outside the scope of the present invention, with a first electrical conductor 50, a second electrical conductor 52 and a water permeable electrical isolator 54 around first electrical conductor 50. In this embodiment first electrical conductor 50 of the wire pair cable is made of a material that has less corrosion resistance in the system than that of the metal object that is monitored (not shown). The effect of the corrosion of first conductor 50 is made relatively greater by making the diameter of the first electrical conductor 50 of the wire pair cable smaller than that of second electrical conductor 52 of the wire pair cable, e.g. no more than half or even no more than 0.2 or 0.1 of the diameter of second electrical conductor 52. The relatively thin first electrical conductor 50 of the wire pair cable may circle helically around a thicker second electrical conductor 52 of the wire pair cable. The second electrical conductor 52 is made of a material that has more corrosion resistance. Although a water permeable electrical isolator layer 54 is shown around first electrical conductor 50, it should be appreciated that a water permeable electrical isolator layer may also or be provided around the second electrical conductor 52, or around both conductors 50, 52. This makes it easier to avoid direct or indirect galvanic contact between first electrical conductor 50 and the pipe, which might undesirably speed up corrosion of the pipe.

According to the present invention the use of a coaxial cable with a water permeable outer conductor and a water permeable electrical isolator layer between the outer conductor and the core conductor makes it easier to avoid additional corrosion due to contact between the first electrical conductor and the pipe. It also makes it easier to use a smaller first electrical conductor.

## Claims

1. A system for monitoring corrosion of a metal object (10), the system further comprising the metal object, a mantle of thermal insulation material (120) surrounding the metal object, an electric cable (14) in the mantle, the electric cable respectively comprising first and second electrical conductors (20, 24), the first electrical conductor having a smaller surface area per unit length than the second electrical conductor, the first and second electrical conductors made of a first and second material respectively, the first material being less corrosion resistant in the system than the second material when water penetrates the mantle, wherein the electric cable is a coaxial cable, the first electrical conductor (20) is a core conductor of the coaxial cable, **characterised in that** the second electrical conductor (24) is a water permeable conductor surrounding the first electrical conductor, the coaxial cable comprising an electrical insulator (22) disposed between the first and second electrical conductors, wherein the electrical insulator (22) is water permeable, so that water from the mantle is able to permeate to the first conductor through the second conductor and the electrical insulator.

2. A system according to claim 1, wherein the electrical insulator is a braided insulator of braided electrically insulating strands.

3. A system according to claim 1 or 2, wherein the second electrical conductor is a braided electrical conductor of braided electrically conductive strands.

4. A system according to any of the preceding claims, wherein at least an outer surface of the metal object is made of the first material.

5. A system according to any of the preceding claims, comprising a removable galvanic connection between the first and second electrical conductors.

6. A system according to any of the preceding claims, comprising a coupling loop galvanically coupled between the first and second electrical conductor.

7. A system according to any of the preceding claims, wherein the metal object is a metal pipe.

8. A method of monitoring a system as claimed in any of the preceding claims for water ingress into the mantle (120) of the thermal insulation material surrounding the metal object, the method comprising
- short circuiting the first and second electrical conductors (20, 24)
with respect to each other during periods of normal use of the metal object;
- removing the short circuit and creating an interruption between these periods of normal use and
- measuring reflections of electrical signals sent along the cable during the interruption.

## Patentansprüche

1. System zur Überwachung der Korrosion eines metallischen Objekts (10), wobei das System weiter aufweist: das metallische Objekt, einen Mantel aus thermischem Isolierungsmaterial (120), der das metallische Objekt umgibt, ein elektrisches Kabel (14) in dem Mantel, wobei das elektrische Kabel jeweils einen ersten und einen zweiten elektrischen Leiter (20, 24) aufweist, wobei der erste elektrische Leiter eine kleinere Oberfläche pro Längeneinheit aufweist als der zweite elektrische Leiter, wobei der erste und der zweite elektrische Leiter aus einem ersten bzw. einem zweiten Material hergestellt sind, wobei das erste Material in dem System weniger korrosionsbeständig ist als das zweite Material, wenn Wasser in den Mantel eindringt, wobei das elektrische Kabel ein koaxiales Kabel ist, der erste elektrische Leiter (20) ein Kernleiter des koaxialen Kabels ist, **dadurch gekennzeichnet, dass** der zweite elektrische Leiter (24) ein wasserdurchlässiger Leiter ist, der den ersten elektrischen Leiter umgibt, wobei das koaxiale Kabel einen elektrischen Isolator (22) aufweist, der zwischen den ersten und zweiten elektrischen Leitern angeordnet ist, wobei der elektrische Isolator (22) wasserdurchlässig ist, so dass Wasser aus dem Mantel durch den zweiten Leiter und den elektrischen Isolator in den ersten Leiter eindringen kann.

2. System nach Anspruch 1, wobei der elektrische Isolator ein geflochtener Isolator aus geflochtenen elektrisch isolierenden Litzen ist.

3. System nach Anspruch 1 oder 2, wobei der zweite elektrische Leiter ein geflochtener elektrischer Leiter aus geflochtenen elektrisch leitenden Litzen ist.

4. System nach einem der vorhergehenden Ansprüche, wobei mindestens eine äußere Oberfläche des metallischen Objekts aus dem ersten Material hergestellt ist.

5. System nach einem der vorhergehenden Ansprüche, das eine lösbare galvanische Verbindung zwischen dem ersten und dem zweiten elektrischen Leiter aufweist.

6. System nach einem der vorhergehenden Ansprüche, das eine galvanisch zwischen dem ersten und dem zweiten elektrischen Leiter gekoppelte Schlaufe aufweist.

7. System nach einem der vorhergehenden Ansprüche, wobei das metallische Objekt ein Metallrohr ist.

8. Verfahren zur Überwachung eines Systems, wie in einem der vorhergehenden Ansprüche beansprucht, in Bezug auf das Eindringen von Wasser in den Mantel (120) des thermischen Isolierungsmaterials, das das metallische Objekt umgibt, wobei das Verfahren aufweist:
- Kurzschluss des ersten und des zweiten elektrischen Leiters (20, 24) im Verhältnis zueinander während des normalen Gebrauchs des metallischen Objekts;
- Aufhebung des Kurzschlusses und Schaffung einer Unterbrechung zwischen diesen Zeiten der normalen Nutzung und
- Messung der Reflexionen von elektrischen Signalen, die während der Unterbrechung über das Kabel gesendet werden.

## Revendications

1. Système pour la surveillance de la corrosion d'un objet en métal (10), le système comprenant en outre l'objet en métal, une enveloppe de matériau d'isolation thermique (120) encerclant l'objet en métal, un câble électrique (14) dans l'enveloppe, le câble électrique comprenant respectivement des premier et deuxième conducteurs électriques (20, 24), le premier conducteur électrique ayant une plus petite aire surfacique par unité de longueur que le deuxième conducteur électrique, les premier et deuxième conducteurs électriques étant constitués d'un premier et d'un deuxième matériau respectivement, le premier matériau étant moins résistant à la corrosion dans le système que le deuxième matériau lorsque de l'eau pénètre dans l'enveloppe, dans lequel le câble électrique est un câble coaxial, le premier conducteur électrique (20) est un conducteur d'âme du câble coaxial, **caractérisé en ce que** le deuxième conducteur électrique (24) est un conducteur perméable à l'eau encerclant le premier conducteur électrique, le câble coaxial comprenant un isolant électrique (22) disposé entre les premier et deuxième conducteurs électriques, dans lequel l'isolant électrique (22) est perméable à l'eau, de sorte que de l'eau provenant de l'enveloppe soit apte à pénétrer par perméation jusqu'au premier conducteur à travers le deuxième conducteur et l'isolant électrique.

2. Système selon la revendication 1, dans lequel l'isolant électrique est un isolant tressé de brins électriquement isolants tressés.

3. Système selon la revendication 1 ou 2, dans lequel le deuxième conducteur électrique est un conducteur électrique tressé de brins électriquement conducteurs tressés.

4. Système selon l'une quelconque des revendications précédentes, dans lequel au moins une surface externe de l'objet en métal est constituée du premier matériau.

5. Système selon l'une quelconque des revendications précédentes, comprenant une connexion galvanique amovible entre les premier et deuxième conducteurs électriques.

6. Système selon l'une quelconque des revendications précédentes, comprenant une boucle de couplage couplée de manière galvanique entre le premier et le deuxième conducteur électrique.

7. Système selon l'une quelconque des revendications précédentes, dans lequel l'objet en métal est un tuyau en métal.

8. Procédé de surveillance d'un système selon l'une quelconque des revendications précédentes en ce qui concerne une infiltration d'eau dans l'enveloppe (120) du matériau d'isolation thermique encerclant l'objet en métal, le procédé comprenant
- le court-circuitage des premier et deuxième conducteurs électriques (20, 24) l'un par rapport à l'autre pendant des périodes d'utilisation normale de l'objet en métal ;
- le retrait du court-circuit et la création d'une interruption entre ces périodes d'utilisation normale et
- la mesure de réflexions de signaux électriques envoyés le long du câble pendant l'interruption.
